# NEUE EUROPÄISCHE PATENTSCHRIFT

(11) **EP 1 131 804 B2**
(45) Veröffentlichungstag und Bekanntmachung des Hinweises auf die Entscheidung über den Einspruch: **30.11.2005**
(45) Hinweis auf die Patenterteilung: 31.07.2002
(21) Anmeldenummer: 99963254.0
(22) Anmeldetag: 15.11.1999
(51) Int. Cl.: G08G 1/0969

(54) **VORRICHTUNG ZUR EINGABE VON FAHRZIELEN IN EINE NAVIGATIONSVORRICHTUNG**
DEVICE FOR INPUTTING ROUTES INTO A NAVIGATION DEVICE
DISPOSITIF POUR L'ENTREE D'OBJECTIFS D'UN PARCOURS DANS UN SYSTEME DE NAVIGATION

(30) Priorität: 16.11.1998 DE 19852660
(43) Veröffentlichungstag der Anmeldung: 12.09.2001
(73) Patentinhaber: ROBERT BOSCH GMBH, 70442 Stuttgart (DE)
(72) Erfinder: PETZOLD, Bernd, D-31234 Edemissen (DE)
(86) Internationale Anmeldenummer: PCT/DE1999/003644
(87) Internationale Veröffentlichungsnummer: WO 2000/030057

(56) Entgegenhaltungen:
- EP-A- 0 747 670
- EP-A- 0 766 217
- EP-A- 0 803 708
- EP-A- 0 829 704
- JP-A- 1 287 414
- JP-A- 9 210 711
- US-A- 5 944 769
- GRAEF G L: "GRAPHICS FORMATS. A CLOSE LOOK AT GIF, TIFF, AND OTHER ATTEMPTS AT A UNIVERSAL IMAGE FORM T" BYTE,US,MCGRAW-HILL INC. ST PETERBOROUGH, Bd. 14, Nr. 9, 1. September 1989 (1989-09-01), Seiten 305-306,308-310, XP000670379 ISSN: 0360-5280
- LI W ET AL: "VECTOR-BASED SIGNAL PROCESSING AND QUANTIZATION FOR IMAGE AND VIDEO COMPRESSION" PROCEEDINGS OF THE IEEE,US,IEEE. NEW YORK, Bd. 83, Nr. 2, 1. Februar 1995 (1995-02-01), Seiten 317-334, XP000501246 ISSN: 0018-9219

## Beschreibung

### Stand der Technik

Die Erfindung geht aus von einer Vorrichtung zur Eingabe nach der Gattung des Hauptanspruchs. Es ist schon eine Vorrichtung zur Eingabe eines Fahrzieles in eine Navigationsvorrichtung bekannt (Bedienungsanleitung "Berlin Travel Pilot RG 05" Blaupunktwerke GmbH Hildesheim). Hierbei werden einem Benutzer zur Auswahl eines Fahrziels die Fahrziele in reiner Textform geboten, d.h. Bezeichnungen von Fahrzielen werden angegeben.

Dokument EP 829 704 offenbart eine Vorrichtung zur Eingabe eines Fahrziels in ein Navigations system.

Aus der EP 766 217 12 ist ein Verfahren zur Fahrzieleingabe bekannt, bei dem ein Cursor in einer Karte positioniert wird, um ein Fahrziel einzugeben. In die Karte sind Grundvisse von Hönsern eingetragen über die Auswahl eines Hauses wird dieses als ein Fahrziel ausgewählt. Das Haus kann in der Karte auch markiert werden, um sich eine Darstellung des Hauses, die in die Karte eingetragen ist, anzeigen zu lassen.

### Vorteile der Erfindung

Die erfindungsgemäße Vorrichtung zur Eingabe mit den Merkmalen des Hauptanspruchs hat demgegenüber den Vorteil, daß dem Benutzer über die optische Ausgabe für eine Vielzahl möglicher Fahrziele jeweils ein Bild angezeigt wird. Somit kann sich der Benutzer besser über mögliche Fahrziele informieren. Darüberhinaus ist es nun für den Benutzer nicht erforderlich, daß er den Namen oder die Adresse eines Fahrziels kennt. Es ist ausreichend, wenn ihm das optische Erscheinungsbild bekannt ist. Dies ist insbesondere bei Hotels und Gaststätten, deren Namen sich ändern kann und bei Sehenswürdigkeiten wie z.B. Schlössern oder Museen von Vorteil, deren äußeres Erscheinungsbild bekannter als ihre genaue Namensbezeichnung sein kann.

Erfindungsgemäß sind in der optischen Anzeige mehrere Bilder gleichzeitig anzeigbar, so daß für den Benutzer eine Vergleichsmöglichkeit zwischen möglichen Fahrzielen besteht.

Es ist ferner vorteilhaft, daß die anzeigbaren Bilder durch eine Textinformation ergänzbar sind. Der Benutzer hat so die Möglichkeit, sich über den Namen des dargestellten Fahrziels zu informieren. Außerdem sind weitergehende Informationen möglich. Z.B. kann bei einem Hotel der Preis oder bei einem Museum der Ruhetag angegeben werden.

Weiterhin ist es vorteilhaft, daß eines der Kriterien für den Abruf der Bilder eine vorgebbare Entfernung eines Fahrziels ist. Hierdurch kann eine Ausgabe von zu vielen möglichen Fahrzielen vermieden werden und damit die Übersichtlichkeit für den Benutzer gewahrt bleiben. Weiterhin ist es vorteilhaft, daß eines der Kriterien für den Abruf der Bilder eine Zugehörigkeit eines Fahrzieles zu einer auswählbaren Kategorie von Fahrzielen ist. Hierdurch kann die Suche des Benutzers beschleunigt werden, da sie sich auf eine Kategorie nach der Wahl des Benutzers, wie z.B. Hotels oder Museen beschränken kann.

Weiterhin ist es vorteilhaft, daß die Bilder zumindest teilweise über eine Funkverbindung abrufbar sind. Zum einen kann der Benutzer über diese Funkverbindung aktualisierte Bilder abrufen. Weiterhin kann auf diese Weise der benötigte Speicherplatz, der in einem Fahrzeug vorhanden sein muß, in dem sich die Vorrichtung befindet, verringert werden.

Weiterhin ist es vorteilhaft, daß eine Vielzahl der Bilder über einen austauschbaren Datenträger der Vorrichtung zuführbar sind. Dieser Datenträger kann bereits vor Fahrtantritt mit ausgewählten Fahrzielen entsprechend den Reisewünschen des Benutzers belegt sein.

Weiterhin ist es vorteilhaft, daß die Bilder fotorealistische Bilder sind, da auf diese Weise ein hoher Wiedererkennungswert des Objektes für einen Benutzer gegeben ist.

Weiterhin ist es vorteilhaft, daß die Bilder vereinfachte Darstellungen des Fahrzieles sind, die jedoch noch individuelle Merkmale des Fahrzieles aufweisen. Hierdurch kann der Speicherplatzbedarf des gespeicherten Bildes vermindert werden, eine individuelle Wiedererkennung durch einen Benutzer anhand individueller Merkmale bleibt jedoch möglich.

Weiterhin ist es vorteilhaft, daß fürverschiedene Tageszeiten verschiedene Bilder eines Fahrzieles gespeichert sind und die Ausgabe des Bildes von der Tageszeit abhängig ist, um die Wiedererkennung durch einen Benutzer zu verbessern. Denn Fahrziele können sich je nach Tageszeit sehr stark unterscheiden. Ein Gebäude, daß zum Beispiel nachts angestrahlt wird, kann sich in seinem Erscheinungsbild gegenüber einer Beleuchtung durch das Tageslicht stark verändern.

### Zeichnungen

Ausführungsbeispiele der Erfindung sind in der Zeichnung dargestellt und in der nachfolgenden Beschreibung näher erläutert. Es zeigen Figur 1 eine erfindungsgemäße Vorrichtung zur Eingabe von Fahrzielen in eine Navigationsvorrichtung. Figur 2, Figur 3 und Figur 4 zeigen weitere erfindungsgemäße Vorrichtungen zur Eingabe. Figur 5 zeigt eine Auswahl von angezeigten Bildern, die jeweils ein Fahrziel repräsentieren, und über deren Auswahl das Fahrziel bestimmbar ist.

### Beschreibung des Ausführungsbeispiels

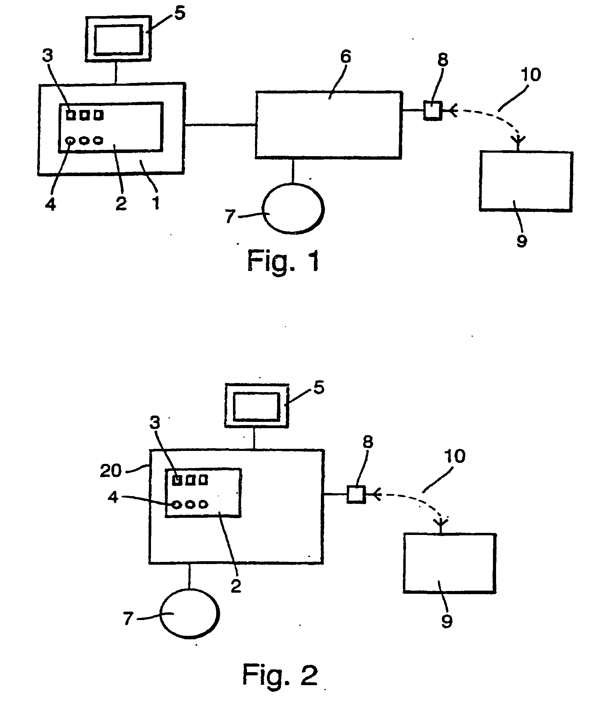

In Figur 1 ist eine erfindungsgemäße Vorrichtung zur Eingabe eines Fahrziels in eine Navigationsvorrichtung dargestellt. Eine Eingabevorrichtung 1 weist ein Bedienfeld 2 auf, das mit Drucktasten 3 und/oder mit Drehknöpfen 4 versehen ist. An die Vorrichtung ist eine optische Anzeige 5 angebracht. Die Vorrichtung 1 ist mit einer Navigationsvorrichtung 6 verbunden. Die Navigatonsvorrichtung 6 weist ein Laufwerk für einen Datenträger 7 und eine Sende- und Empfangseinheit 8 auf. Zwischen der Sende- und Empfangseinheit 8 und einer Dienstezentrale 9 besteht zumindest zeitweise eine Funkverbindung 10.

Möchte der Benutzer eines Fahrzeugs seine Fahrt beginnen und ein Fahrziel in die Navigationsvorrichtung 6 eingeben, so kann er über das Bedienfeld 2 und über die darauf angebrachten Drucktasten 3 und/oder Drehknöpfe 4 ein Bedienungsmenü in der optischen Anzeige 5 aufrufen. Die in dieser und den folgenden Figuren gezeigte optische Anzeige 5 ist dabei vorzugsweise eine Flüssigkristallanzeige, die in Fahrzeugmitte angebracht ist. Ferner kann es sich dabei auch um eine Anzeige handeln, die sich im Bereich der Fahrzeuginstrumente vor dem Fahrer befindet, insbesondere ein frei programmierbares Kommiinstrument, in dem das Menü aufgerufen werden kann. Der Benutzer kann nun über das Bedienfeld 2 Kriterien vorgeben, nach denen mögliche Fahrziele in der optischen Anzeige 5 angezeigt werden sollen. Insbesondere ist hier die maximale Entfernung eines Fahrziels von der momentanen Position des Fahrzeugs möglich. Zum anderen sind mögliche Fahrziele nach bestimmten Kategorien ausgebbar. Hier sind z.B. die Kategorien Hotels, Restaurants, Museen, Sehenswürdigkeiten, Parkplätze und Werkstätten zu nennen. Wählt der Benutzer eines der Kriterien aus, so wird ihm entweder eine weitere Auswahlmöglichkeit geboten, um seine Suche noch mehr zu verfeinern, oder es werden ihm Fahrziele direkt als Bildinformation angezeigt. Der Benutzer kann nun über das Bedienfeld 2 zwischen den einzelnen Bildern wechseln und ebenfalls über das Bedienfeld 2 eine Auswahl für ein Fahrziel treffen. Die Bildinformationen werden vorzugsweise von einem Datenträger zur Verfügung gestellt, der sich in dem Datenträgerlaufwerk 7 befindet. Dieses Datenträgerlaufwerk stellt eine mögliche Speichereinheit dar, aus der die Bildinformationen abrufbar sind. Außerdem können hier ergänzende Textinformationen gespeichert sein. Ferner können Bilder über die Sende- und Empfangseinheit 8 über die Funkverbindung 10 von der Dienstzentrale 9, also von einer Speichereinheit außerhalb des Fahrzeugs, abgerufen werden und über die Navigationsvorrichtung 6 an die Vorrichtung zur Eingabe weitergeleitet werden.

Die Information über das Fahrziel wird von der Vorrichtung zur Eingabe an die Navigationsvorrichtung weitergeleitet. Diese verfügt über eine nicht eingezeichnete Einheit zur Fahrtroutenberechnung, sowie über nicht eingezeichnete Fahrzeugsensoren und einen GPS-Empfänger, die die Ermittlung der Fahrzeugposition ermöglichen. Die aktuell ermittelte Fahrzeugposition wird vor Auswahl des Fahrziels bereits an die Vorrichtung zur Eingabe 1 weitergeleitet, um eine Anzeige von möglichen Fahrzielen in einer bestimmten Entfernung von der aktuellen Fahrzeugposition zu ermöglichen. Die möglichen Fahrziele sind mit Positionen in einer digitalen Karte verknüpft, die vorzugsweise der Navigationsvorrichtung 6 über einen Datenträger in dem Datenträgerlaufwerk 7 zugeführt wird. Die Position kann dabei durch einen Punkt, einen Vektor oder eine Fläche in der digitalen Karte repräsentiert sein. Der Datenträger ist dabei vorzugsweise eine CD oder eine DVD. Die Funkverbindung wird vorzugsweise über eine DAB (Digital Audio Broadcasting), eine DMB (Digital Multimedia Broadcasting) oder eine GSM-Verbindung (Global System for Mobile communications) realisiert. Hierzu kann eine vorhandene GSM Empfangs- und Sendevorrichtung eines eventuell vorhandenen Autotelefons bzw. ein DAB- sowie DMB-Empfänger mitbenutzt werden. Die von der Navigationsvorrichtung berechnete Fahrtroute wird über eine nicht eingezeichnete Audioausgabe oder über eine optische Ausgabe in Abhängigkeit von der aktuellen Fahrzeugposition an den Benutzer ausgegeben. Die optische Ausgabe 5 kann zur Ausgabe der berechneten Fahrtroute bzw. zur Ausgabe von Fahrhinweisen mitbenutzt werden.

In Figur 2 ist eine erfindungsgemäße Vorrichtung zur Eingabe eines Fahrzieles in eine Navigationsvorrichtung 20 integriert. Die Navigationsvorrichtung 20 weist ein Bedienfeld 2 mit Drucktasten 3 und/oder Drehknöpfen 4 sowie eine optische Anzeige 5 auf. Ferner ist ein Datenträgerlaufwerk 7 und optional eine Sende- und Empfangseinrichtung 8 vorhanden, mit der eine Funkverbindung 10 von der Navigationsvorrichtung 20 zu einer Dienstezentrale 9 möglich ist. Die Funktionen entsprechen dem Ausführungsbeispiel in Figur 1. Lediglich ist die Eingabeeinheit 1 aus Figur 1 hier in die Navigationsvorrichtung 20 fest integriert.

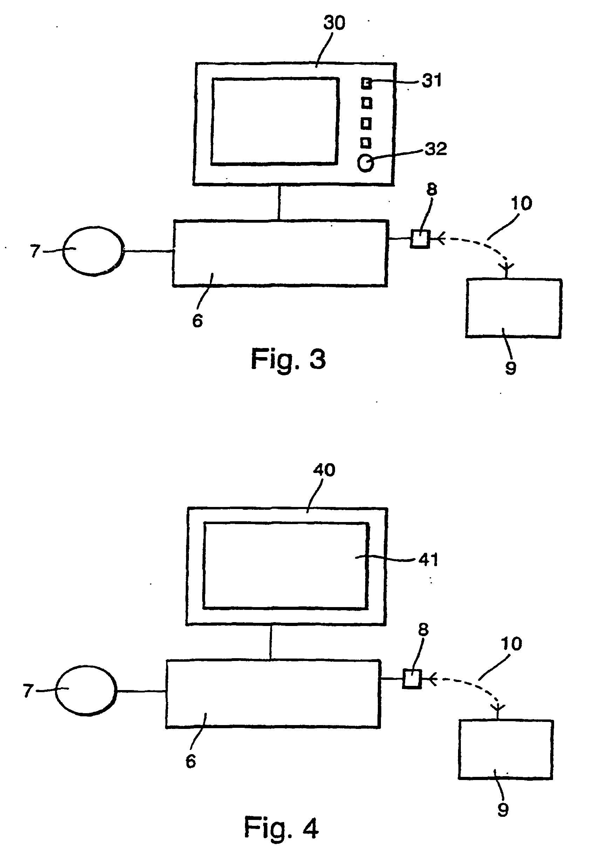

In Figur 3 ist ein weiteres erfindungsgemäßes Ausführungsbeispiel dargestellt. Das Bedienfeld der Vorrichtung zur Eingabe ist hier in die optische Anzeige 30 integriert. Es sind Drucktasten 31 und/oder Drehknöpfe 32 vorhanden. Die optische Anzeige 30 ist ferner mit der Navigationsvorrichtung 6 verbunden. Die Navigationsvorrichtung 6 weist wiederum ein DatenträgerLaufwerk 7 sowie eine Sende- und Empfangseinheit 8 zur Herstellung einer Funkverbindung 10 zu einer Dienstezentrale 9 auf. Das Ausführungsbeispiel in Figur 3 unterscheidet sich von dem Ausführungsbeispiel in Figur 1 dadurch, daß das Bedienfeld 2 in Figur 1 in die optische Anzeige 5 in Figur 1 integriert und an die Abmessungen der optischen Anzeige angepaßt ist. Die übrigen Funktionen bleiben gleich.

In Figur 4 ist ein weiteres Ausführungsbeispiel dargestellt. Die optische Anzeige 40 ist als Touch-Screen-Monitor ausgeführt. Eine Menüsteuerung und Auswahl eines Fahrziels erfolgt über eine berührungsempfindliche Anzeigefläche 41, die das Bedienfeld ersetzt. Durch Berühren eines der in der Anzeigefläche 41 als Bild dargestellten Fahrziels wird dieses Fahrziel ausgewählt. Die optische Anzeige 40 ist mit einer Navigationsvorrichtung 6, einem Datenträgerlaufwerk 7 und einer Sende- und Empfangseinheit 8 ausgebildet, die zur Herstellung einer Funkverbindung 10 zu einer Dienstezentrale 9 dient. Das Ausführungsbeispiel in Figur 4 unterscheidet sich von dem Ausführungsbeispiel in Figur 3 dadurch, daß Tasten 31 und/oder Drehknöpfe 32 wegfallen und stattdessen eine Bedienung durch den Benutzer über die berührungsempfindliche Anzeigefläche 41 erfolgt. Die übrigen Funktionen bleiben gegenüber dem Ausführungsbeispiel in Figur 3 gleich.

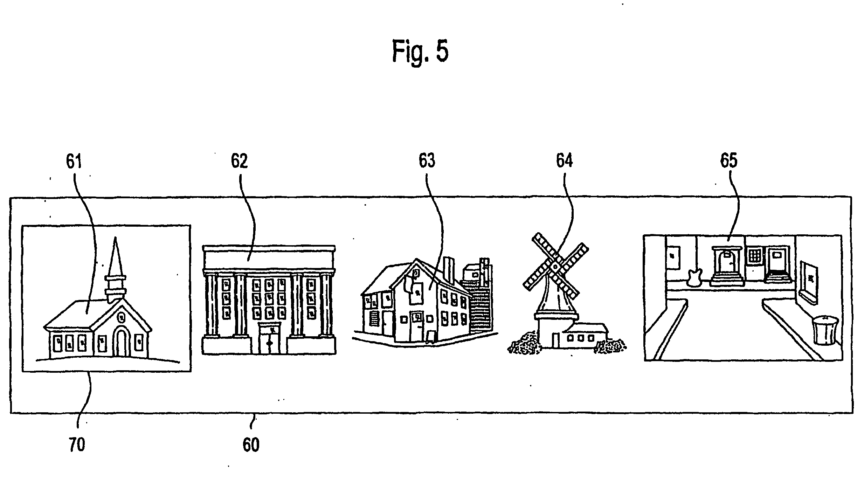

In der Figur 5 ist ein Anzeigebereich 60 dargestellt, der in der optischen Anzeige 5 dargestellt wird. Der Anzeigebereich 60 kann dabei den gesamten Bereich der optischen Anzeige 5 ausfüllen oder nur in einem Teilbereich angezeigt werden. In dem Anzeigebereich 60 ist ein erstes Bild 61, eine Kirche, ein zweites Bild 62, ein großes Gebäude, ein drittes Bild 63, ein Wohnhaus, ein viertes Bild 64, eine Windmühle, ein fünftes Bild 65, Straßenecke dargestellt. Um das erste Symbol 61 befindet sich ein Rahmen 70. Der Rahmen kann durch eine Bedienung der Drucktasten 3 und/oder der Drehknöpfe 4 verschoben werden. Ist die optische Anzeige 5 als ein Touch-Screen-Monitor aufgeführt, so ist eine Verschiebung des Rahmens 70 auch durch Druck auf die berührungsempfindliche Anzeigefläche 41 möglich. Der Rahmen 70 kennzeichnet mit dem von ihm umrahmtem Bild, also in diesem Ausführungsbeispiel das erste Bild 61, das Fahrziel, das als Fahrziel für die Navigationsvorrichtung ausgewählt ist. Durch eine Verschiebung des Rahmens 70, zum Beispiel über die Drucktasten 3 oder die Drehknöpfe 4, ist ein Wechsel des Fahrziels möglich, zum Beispiel zu dem von dem vierten Bild 64 repräsentierten Fahrziel, der Windmühle. In einem bevorzugten Ausführungsbeispiel ist nach dem Wechsel des Rahmens 70 für eine Bestätigung des neuen Fahrziels eines solchen Wechsels des Fahrzieles eine Betätigung einer Drucktaste 3 oder eines Drehknopfes 4 erforderlich.

Bei dem ersten Bild 61, das für eine nähere Beschreibung ausgewählt wird, ist eine Kirche mit einem Turm dargestellt. Zum Beispiel an der Form des Turmes kann ein Fahrer die Kirche, die er von Bildern kennt oder an der er sich schon einmal befunden hat, wiedererkennen und als Fahrziel auswählen, da der Turm ein individuelles, wiedererkennbares Merkmal der Kirche, also des Fahrziels, ist. Er muß hierzu weder den Namen der Kirche, noch die genaue Straße kennen. In einem bevorzugten Ausführungsbeispiel ist hierzu das erste Bild 61 als ein Foto in Datenform in einer der Navigationsvorrichtung 6 zugeordneten Speichereinheit, zum Beispiel auf dem Datenträger 7 in dem der Navigationsvorrichtung 6 zugeordneten Laufwerk abgelegt. Das Foto kann zum Beispiel mit Hilfe einer Digitalkamera aufgenommen worden sein. Bilder in Datenform können zum Beispiel in pixelbasierten Grafikformaten auf den Datenträger 7 abgelegt sein. Ein Beispiel für ein pixelbasiertes Grafikformat ist zum Beispiel das sogenannte Bitmap. Ferner sind z.B. auch folgende Datenformate möglich: GIF (Compuserve Grafics Interchange Format) TIFF (Tagged Image File Format), PCX (Paintbrush), JPEG oder MPG. Ferner ist auch eine Darstellung von vektorbasierten Formaten, wie HPGL (HP Grafics Library) möglich.

In einem weiteren Ausführungsbeispiel werden die fotorealistischen Bilddaten nach ihrer Aufnahme z.B. durch die Digitalkamera nicht direkt auf dem Datenträger 7 gespeichert, sondern zunächst mit einer in der Zeichnung noch nicht dargestellten Computereinrichtung mit einem Grafikprogramm bearbeitet, das eine Veränderung von Bilddaten ermöglicht. Durch diese Bearbeitung ist es möglich, zum Beispiel die Farbtiefe von Bildern zu reduzieren, oder lediglich die Umrisse eines Objektes, was in dem Bild dargestellt ist, zu erhalten, also eine sogenannte Umrißextraktion durchzuführen. Durch die Bearbeitung ist es möglich, den Datenumfang eines Bildes zu reduzieren und damit den Speicherplatzbedarf für ein Bild zu verringern, so daß auf dem Datenträger 7 mehr Bilder gespeichert werden können. Dabei werden durch die Umrißextraktion oder die Reduzierung der Farbtiefe von Bildern im allgemeinen individuelle Eigenschaften, die ein Fahrziel kennzeichnet, wie zum Beispiel der Kirchturm in dem ersten Bild 61, in dem Bild erhalten. Eine Wiedererkennung durch einen Benutzer der Navigationsvorrichtung ist auf diese Weise gewahrt.

Zu einem Fahrziel können mehrere Bilder gespeichert sein, die zu verschiedenen Tageszeiten, vor zugsweise tagsüber und nachts, aufgenommen worden sind. Durch eine der Navigationsvorrichtung 6 zugeordneten Uhr, die in der Zeichnung nicht dargestellt ist, steht in der Navigationsvorrichtung 6 eine Zeitinformation zur Verfügung. Bei der Darstellung eines Fahrziels wird in einem bevorzugten Ausführungsbeispiel dann der geschätzte Zeitpunkt der Zielerreichung verwendet, um das Fahrziel gemäß der Tageszeit der Zielerreichung anzuzeigen, so daß eine Wiedererkennung Fahrziels bei dem in der optischen Anzeige ausgegebenen Fahrziel ermöglicht wird.

## Patentansprüche

1. Vorrichtung zur Eingabe eines Fahrziels in eine Navigationsvorrichtung, die zur Navigation eines Fahrzeugs in einem Straßennetz dient, wobei die Vorrichtung eine optische Anzeige aufweist, die einen Benutzer bei der Auswahl eines Fahrziels unterstützt, wobei in der optischen Anzeige für eine Vielzahl möglicher Fahrziele jeweils ein Bild anzeigbar ist, das das Fahrziel repräsentiert, wobei die Bilder aus einer Speichereinheit nach vorgebbaren Kriterien abrufbar sind, **dadurch gekennzeichnet, dass** in der optischen Anzeige (5, 30, 40) für eine Vielzahl möglicher Fahrziele jeweils Bilder eines äußeren Erscheinungsbildes (61, 62, 63, 64, 65) des jeweiligen Fahrziels anzeigbar sind, dass ein Fahrziel durch die Auswahl eines derdargestellten Bilder durch den Benutzer auswählbar ist und **dass** in der optischen Anzeige (5, 30, 40) mehrere Bilder gleichzeitig anzeigbar sind, aus denen durch den Benutzer das Fahrziel auswählbar ist.

2. Vorrichtung zur Eingabe eines Fahrziels in eine Navigationsvorrichtung, die zur Navigation eines Fahrzeugs in einem Straßennetz dient, wobei die Vorrichtung eine optische Anzeige aufweist, die einen Benutzer bei der Auswahl eines Fahrziels unterstützt, wobei in der optischen Anzeige für eine Vielzahl möglicher Fahrziele jeweils ein Bild anzeigbar ist, das das Fahrziel repräsentiert, wobei die Bilder aus einer Speichereinheit nach vorgebbaren Kriterien abrufbar sind, **dadurch gekennzeichnet, dass** die Bilder fotorealistische Bilder (61, 62, 63, 64, 65) des Fahrziels sind, dass ein Fahrziel durch den Benutzer durch die Auswahl eines der dargestellten Bilder auswählbar ist und **dass** in der optischen Anzeige (5, 30, 40) mehrere Bilder gleichzeitig anzeigbar sind, aus denen durch den Benutzer das Fahrziel auswählbar ist.

3. Vorrichtung nach einem der vorhergehenden Ansprüche **dadurch gekennzeichnet, dass** eine Vielzahl der anzeigbaren Bilder durch eine Textinformation ergänzbar ist, die dem Fahrziel zugeordnet und in der Speichereinheit (7, 9) abgelegt ist.

4. Vorrichtung nach einem der vorhergehenden Ansprüche, **dadurch gekennzeichnet, dass** ein Kriterium für den Abruf eine vorgebbare Entfernung eines Fahrziels ist.

5. Vorrichtung nach einem der vorhergehenden Ansprüche, **dadurch gekennzeichnet, dass** ein Kriterium für den Abruf eine Zugehörigkeit eines Fahrziels zu einer auswählbaren Kategorie von Fahrzielen ist.

6. Vorrichtung nach einem der vorhergehenden Ansprüche, **dadurch gekennzeichnet, dass** die Bilder zumindest teilweise über eine Funkverbindung (10) abrufbar sind.

7. Vorrichtung nach einem der vorhergehenden Ansprüche, **dadurch gekennzeichnet, dass** eine Vielzahl der Bilder über einen austauschbaren Datenträger (7) der Vorrichtung zuführbar sind.

8. Vorrichtung nach einem der vorhergehenden Ansprüche, **dadurch gekennzeichnet, dass** die Bilder eine vereinfachte Darstellung des Fahrzieles sind, wobei die Bilder zumindest ein individuelles, wiedererkennbares Merkmal des Fahrzieles aufweisen.

9. Vorrichtung nach einem der vorhergehenden Ansprüche, **dadurch gekennzeichnet, dass** für ein Fahrziel mindestens zwei Bilder gespeichert sind, dass in den mindestens zwei Bildern das Fahrziel zu verschiedenen Tageszeiten dargestellt ist und dass die Ausgabe des Bildes eines Fahrzieles von der Zeit der Ausgabe abhängig ist.

10. Vorrichtung nach einem der vorhergehenden Ansprüche, **dadurch gekennzeichnet, dass** die Bilder in einem vektorbasierten Datenformat oder in einem pixelbasierten Datenformat in der Speichereinheit (7, 9) abgelegt sind.

## Claims

1. Device for inputting a destination into a navigation device which serves for navigating a vehicle in a road network, in which the device has a visual display that assists a user during selection of a destination, in which one image representing the destination can be displayed in each case on the visual display for a multiplicity of possible destinations, it being possible to retrieve the images from a storage unit according to definable criteria, **characterized in that** in each case images of an external appearance (61, 62, 63, 64, 65) of the respective destination can be displayed on the visual display (5, 30, 40) for a multiplicity of possible destinations, **in that** a destination can be selected by the user by selection of one of the images displayed and **in that** a plurality of images can be displayed simultaneously on the visual display, (5, 30, 40) from which the user can select the destination.

2. Device for inputting a destination into a navigation device which serves for navigating a vehicle in a road network, in which the device has a visual display that assists a user during selection of a destination, in which one image representing the destination can be displayed in each case on the visual display for a multiplicity of possible destinations, it being possible to retrieve the images from a storage unit according to definable criteria, **characterized in that** the images are photorealistic images (61, 62, 63, 64, 65) of the destination, **in that** a destination can be selected by the user by selection of one of the images displayed and **in that** a plurality of images can be displayed simultaneously on the visual display, (5, 30, 40) from which the user can select the destination.

3. Device according to one of the preceding claims, **characterized in that** a multiplicity of the displayable images can be supplemented by text information which is associated with the destination and is stored in the storage unit (7, 9).

4. Device according to one of the preceding claims, **characterized in that** one criterion for retrieval is a definable distance of a destination.

5. Device according to one of the preceding claims, **characterized in that** one criterion for retrieval is an assignment of a destination to a selectable category of destinations.

6. Device according to one of the preceding claims, **characterized in that** it is possible to retrieve at least some images using a radio connection (10).

7. Device according to one of the preceding claims, **characterized in that** a multiplicity of the images can be supplied to the device using an interchangeable data medium (7).

8. Device according to one of the preceding claims, **characterized in that** the images are a simplified representation of the destination, with the images showing at least one individual recognizable feature of the destination.

9. Device according to one of the preceding claims, **characterized in that** at least two images are stored for a destination, **in that** the destination is represented at different times of day in the at least two images, and **in that** the output of the image of a destination is dependent on the time of output.

10. Device according to one of the preceding claims, **characterized in that** the images are stored in the storage unit (7, 9) in a vector-based data format or in a pixel-based data format.

## Revendications

1. Dispositif d'entrée d'un objectif dans un dispositif de navigation servant à la navigation d'un véhicule dans un réseau routier, le dispositif comportant un afficheur optique assistant l'utilisateur pour la sélection d'un objectif, l'afficheur optique affichant un grand nombre d'objectifs possibles, chaque fois sous la forme d'une image représentant l'objectif, les images étant appelées selon des critères prédéterminés dans une mémoire,
**caractérisé en ce que**
l'afficheur optique (5, 30, 40) permet d'afficher pour un grand nombre d'objectifs possibles, les images respectives d'un aspect extérieur (61, 62, 63, 64, 65) de chaque objectif, l'objectif est sélectionné par l'utilisateur par le choix de l'une des images affichées, et l'afficheur optique (5, 30, 40) peut afficher simultanément plusieurs images parmi lesquelles l'utilisateur choisit l'objectif.

2. Dispositif d'entrée d'un objectif dans un dispositif de navigation servant à la navigation d'un véhicule dans un réseau routier, le dispositif comportant un afficheur optique assistant l'utilisateur dans le choix de son objectif, l'afficheur optique pouvant afficher un grand nombre d'objectifs possibles, chaque fois sous la forme d'une image représentant l'objectif, les images étant appelées d'une mémoire selon des critères prédéterminés,
**caractérisé en ce que**
les images (61, 62, 63, 64, 65) de l'objectif sont des images de type photo, l'objectif est sélectionné par l'utilisateur qui choisit l'une des images présentées, et l'afficheur optique (5, 30, 40) peut afficher simultanément plusieurs images parmi lesquelles l'utilisateur choisit l'objectif.

3. Dispositif selon l'une quelconque des revendications précédentes,
**caractérisé en ce qu'**
un grand nombre d'images affichables peuvent être complétées par une information de texte associée à l'objectif et enregistrée dans la mémoire (7, 9).

4. Dispositif selon l'une quelconque des revendications précédentes,
**caractérisé en ce qu'**
un critère de l'appel est un éloignement pré-déterminé de l'objectif.

5. Dispositif selon l'une quelconque des revendications précédentes,
**caractérisé en ce qu'**
un critère de l'appel est l'appartenance d'un objectif à une catégorie d'objectifs susceptible d'être sélectionnée.

6. Dispositif selon l'une quelconque des revendications précédentes,
**caractérisé en ce que**
les images peuvent être appelées, au moins en partie, par une liaison radio (10).

7. Dispositif d'entrée selon l'une quelconque des revendications précédentes,
**caractérisé en ce qu'**
un grand nombre d'images peut être fourni par un support de données (7) amovible installé dans le dispositif.

8. Dispositif selon l'une quelconque des revendications précédentes,
**caractérisé en ce que**
les images sont une représentation simplifiée de l'objectif, les images présentant au moins une caractéristique individuelle reconnaissable de l'objectif.

9. Dispositif selon l'une quelconque des revendications précédentes,
**caractérisé en ce qu'**
au moins deux images sont enregistrées pour un objectif et ces deux images correspondent à des images prises à des moments différents de la journée, et l'émission de l'image de l'objectif dépend du moment de son affichage.

10. Dispositif selon l'une quelconque des revendications précédentes,
**caractérisé en ce que**
les images sont enregistrées sous un format de données vectoriel ou un format de données à base de pixels dans une mémoire (7,9).
